# EUROPÄISCHE PATENTSCHRIFT

(11) **EP 3 253 815 B1**
(45) Veröffentlichungstag und Bekanntmachung des Hinweises auf die Patenterteilung: **15.06.2022**
(21) Anmeldenummer: 16702411.6
(22) Anmeldetag: 01.02.2016
(51) Int. Cl.: C08G 63/50, C08G 63/64, C08G 63/91, C08F 8/14, C08G 71/04

(54) **ISOCYANATFREIE SYNTHESE CARBONATMODIFIZIERTER POLYMERE**
ISOCYANATE-FREE SYNTHESIS OF CARBONATE-MODIFIED POLYMERS
SYNTHÈSE SANS ISOCYANATE DE POLYMÈRE DE CARBONATE MODIFIÉ

(30) Priorität: 05.02.2015 EP 15153944
(43) Veröffentlichungstag der Anmeldung: 13.12.2017
(73) Patentinhaber: Evonik Operations GmbH, 45128 Essen (DE)
(72) Erfinder: CRON, Christina, 42555 Velbert (DE); BRENNER, Gabriele, 48249 Dülmen (DE)
(74) Vertreter: Evonik Patent Association
(86) Internationale Anmeldenummer: PCT/EP2016/052025
(87) Internationale Veröffentlichungsnummer: WO 2016/124518

(56) Entgegenhaltungen:
- EP-A2- 0 328 150
- WO-A1-2012/007254
- WO-A1-2014/068250
- TSAI C J ET AL: "Synthesis and characterization of polyesters derived from succinic acid, ethylene glycol and 1,3-propanediol", EUROPEAN POLYMER JOURNAL, PERGAMON PRESS LTD. OXFORD, GB, vol. 44, no. 7, 1 July 2008 (2008-07-01), pages 2339-2347, XP022853395, ISSN: 0014-3057, DOI: 10.1016/J.EURPOLYMJ.2008.05.002 [retrieved on 2008-07-01]

## Beschreibung

Die vorliegende Erfindung betrifft ein isocyanatfreies und bevorzugt lösemittelfreies Verfahren zur Herstellung von Polymeren, die fünfgliedrige cyclische Carbonatgruppen enthalten.

Die polymeranaloge Funktionalisierung von Polymerendgruppen zu fünfgliedrigen cyclischen Carbonatgruppen ist Stand der Technik. So beschreibt die DE102007023867 die Funktionalisierung der von Aminogruppen enthaltenden Verbindungen mit Glycerincarbonatchloroformiat. Die Bildung der Amidgruppen verläuft quantitativ. Die Herstellung des Säurechlorids aus Glycerincarbonat stellt jedoch einen zusätzlichen Reaktionsschritt dar.

Eine weitere Syntheseroute ist die Umsetzung von 4-Tosylmethyl-1,3-dioxolan-2-on mit Hydroxylgruppen-terminierten Polymeren, wie beispielsweise Polyethern. Auch hier wird nicht das Glycerincarbonat, sondern ein Derivat eingesetzt, das zuvor aus Glycerincarbonat dargestellt wird.

Die polymeranaloge Umsetzung mit kommerziell verfügbarem, nicht modifiziertem Glycerincarbonat wird in EP328150 beschrieben. Die Reaktion des freien Alkohols am Glycerincarbonat erfolgt mit Anhydridgruppen eines Polymers. Allerdings sind Polymere mit Anhydridgruppen aufgrund ihrer hohen Reaktivität in der Regel nicht während des Reaktionsprozesses, sondern nur nach polymeranaloger Umsetzung zugänglich. Dies gilt insbesondere für Polyamide und Polyester, die mittels Polykondensation synthetisiert werden.

Die Umsetzung von hydroxyterminierten Polymeren mit unsubstituiertem Glycerincarbonat ist ebenfalls beschrieben. Die Verknüpfung erfolgt über Diisocyanate, die sowohl mit den Alkoholgruppen des Polymers als auch des Glycerincarbonats zum Urethan reagieren. Dies kann über eine Reaktionsstufe erfolgen, wie beispielsweise in der JP 06145264 A beschrieben, bei der die Polyole gleichzeitig mit Diisocyanat und Glycerincarbonat gemischt werden. Der Nachteil ist, dass es durch kovalente Verknüpfung zweier Polymere mit einem Molekül Diisocyanat zu Kettenverlängerungen kommt.

Ein alternatives, kontrolliertes Verfahren stellt eine zweistufige Syntheseroute zunächst zum isocyanatterminierten Präpolymer dar, das anschließend mit Glycerincarbonat umgesetzt wird. Die WO 2006010408 beschreibt dieses Vorgehen für hydroxylterminierte Polyester.

Nachteilig bei letztgenannten Verfahren ist, dass Isocyanate eingesetzt werden. Isocyanate, insbesondere niedermolekulare, nicht polymergebundene Isocyanate, sind toxikologisch bedenklich. Daher sind bei der Herstellung aufwendige Arbeitssicherheitsmaßnahmen zu treffen und es ist eine entsprechende Kennzeichnung des Produkts erforderlich. Zudem muss sichergestellt werden, dass in der Endanwendung die Freisetzung von Isocyanaten in die Atemluft oder durch Migration verhindert wird.

Die Verwendung der carbonatfunktionalisierten Polymere in isocyanatfreien Polyurethansystemen zielt insbesondere auf eine Vermeidung von Isocyanaten ab.

WO 2012007254 beschreibt eine isocyanatfreie Verknüpfung über eine stöchiometrische Kopplung mit Dicyclohexylcarbodiimid anstelle von Diisocyanaten, wobei die Basispolymere durch Ringöffnungsreaktion hergestellt werden. Durch die beschriebene Polymerisationsreaktion können nur OH-terminierte Polymere erhalten werden, die anschließend mit einem Anhydrid umgesetzt werden müssen, um die Säureterminierung zu erhalten. So muss das Polyol zunächst mit zum Beispiel Bernsteinsäureanhydrid umgesetzt werden. Die entstandenen Carboxylendgruppen reagieren in einem zweiten Reaktionsschritt mit Glycerincarbonat. Dies erfolgt in Dichlormethan unter Zugabe von Aktivierungsreagenzien. Insgesamt ist dieses zweistufige Verfahren sehr aufwendig und kann auch nicht lösemittelfrei oder katalytisch durchgeführt werden.

WO2014068250 (A1) beschreibt die Herstellung von cyclische Carbonatgruppen tragenden Polymeren durch Umsetzung der OH-Gruppen eines Polyesters mit einem Tosylat eines Glycerincarbonats. Die cyclischen Carbonatgruppen tragenden Polymeren können mit einer, mindestens eine Amingruppe tragenden Verbindung zu Polyurethanen umgesetzt werden.

Aufgabe der vorliegenden Erfindung ist die Bereitstellung eines verbesserten Zugangs zu carbonatmodifizierten Polymeren, der möglichst einfach durchführbar ist und idealerweise ohne den Einsatz von Isocyanaten auskommt. Diese genannte Aufgabe wird durch Verfahren gemäß der vorliegenden Erfindung gelöst.

Demgemäß ist ein erster Gegenstand der vorliegenden Erfindung ein Verfahren zur Herstellung cyclische Carbonatgruppen tragender Polymere durch Umsetzung Carboxylgruppen-tragender Polymere, ausgewählt aus der Gruppe umfassend durch Polykondensationsreaktionen hergestellter Polyester auf Basis von Di- oder Polyolen und Di- oder Polycarbonsäuren bzw. deren Derivaten oder Poly(meth)acrylate, mit Hydroxylgruppen-funktionalisierten fünfgliedrigen cyclischen Carbonaten, bevorzugt Glycerincarbonat (4-Hydroxymethyl-1,3-dioxolan-2-on) und unter Ausschluss des Zusatzes von Isocyanaten, wobei in einem ersten Reaktionsschritt die Carboxylgruppen-tragenden Polymere durch Polykondensation bzw. Polymerisation hergestellt, und die erhaltenen Carboxylgruppen-tragenden Polymere anschließend in einem zweiten Reaktionsschritt mit Hydroxylgruppen-funktionalisierten fünfgliedrigen cyclischen Carbonaten umgesetzt werden. Bevorzugt wird die Reaktion in Gegenwart eines Katalysators durchgeführt. Weiterhin bevorzugt wird die Reaktion ohne den Einsatz von weiteren stöchiometrisch verwendeten Kopplungsreagenzien durchgeführt.

Vorteil des erfindungsgemäßen Verfahrens ist, dass es sich um ein isocyanatfreies und bevorzugt lösemittelfreies Verfahren handelt, mit dem auf einfache Weise Polyester auf Basis von Di- oder Polyolen und Di- oder Polycarbonsäuren bzw. deren Derivaten oder Poly(meth)acrylate erhalten werden, die cyclische Carbonatgruppen, insbesondere fünfgliedrige Carbonatgruppen, tragen. Damit umgeht das Verfahren der vorliegenden Erfindung die Nachteile des Stands der Technik. Kommerziell verfügbares Glycerincarbonat kann ohne vorherige Derivatisierung oder Aufreinigung verwendet werden. Zudem ist keine vorherige Aktivierung der funktionellen Gruppen am Polymer, wie beispielsweise die Umsetzung mit einem Anhydrid, erforderlich. Darüber hinaus werden für die Synthese keine Isocyanate benötigt. Auch der Einsatz der aus dem Stand der Technik bekannten weiteren stöchiometrisch verwendeten Kopplungsreagenzien kann bei dem erfindungsgemäßen Verfahren vorteilhafterweise entfallen. Ein weiterer Vorteil des erfindungsgemäßen Verfahrens ist, dass beispielsweise COOH-terminierte Polyester und COOH-haltige Poly(meth)acrylate gemeinsam in einer Reaktion mit Hydroxylgruppen-funktionalisierten fünfgliedrigen cyclischen Carbonaten modifiziert werden können.

Bei dem eingesetzten Carboxylgruppen-tragenden Polymer handelt es sich um Polyester auf Basis von Di-oder Polyolen und Di- oder Polycarbonsäuren bzw. deren Derivaten oder Poly(meth)acrylate.

Entsprechende Poly(meth)acrylate, das heißt Polyacrylate bzw. Polymethacrylate, können beispielsweise durch freie oder kontrollierte radikalische Polymerisation von Acrylaten oder Methacrylaten synthetisiert werden, wobei mindestens eines der genannten Comonomere eine Carboxyfunktionalität besitzt. Hierbei kann es sich beispielsweise um Acrylsäure oder Methacrylsäure handeln.

Besonders bevorzugt handelt es sich bei den Carboxylgruppen-tragenden Polymeren um Polyester auf Basis von Di-oder Polyolen und Di- oder Polycarbonsäuren bzw. deren Derivaten, die wiederum vorzugsweise durch Schmelzekondensation aus den Di-oder Polyolen und Di- oder Polycarbonsäuren bzw. deren Derivaten synthetisiert werden.

Im Hinblick auf die Di- oder Polyole und Di- oder Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Als Di- oder Polycarbonsäuren können sämtliche dem Fachmann bekannten organischen Säuren mit zwei oder mehr enthaltenen Carboxyfunktionalitäten eingesetzt werden. Unter

Carboxyfunktionalitäten werden im Sinne der vorliegenden Erfindung auch deren Derivate, beispielsweise Ester oder Anhydride, verstanden.

Bei den Di- oder Polycarbonsäuren kann es sich insbesondere um aromatische oder um gesättigte oder ungesättigte aliphatische oder gesättigte oder ungesättigte cycloaliphatische Di- oder Polycarbonsäuren handeln. Bevorzugt werden bifunktionelle Dicarbonsäuren eingesetzt. Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid.

Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure, Korksäure, Azelainsäure, Dimethylazelat, Sebacinsäure, Dimethylsebacat, Undecandicarbonsäure, 1,10-Decandicarbonsäure, 1,12 - Dodecandicarbonsäure, Brassylsäure, 1,14-Tetradecandicarbonsäure, Hexadecandisäure, Tridecandisäure, Tetradecandisäure, Octadecandisäure, Dimerfettsäuren und Mischungen daraus.

Beispiele ungesättigter linearer Di- und/oder Polycarbonsäuren umfassen Itaconsäure, Fumarsäure, Maleinsäure oder Maleinsäureanhydrid.

Beispiele gesättigter cycloaliphatischer Di- und/oder Polycarbonsäuren umfassen Derivate von 1,4-Cyclohexandicarbonsäuren, 1, 3-Cyclohexandicarbonsäuren und 1,2-Cyclohexandicarbonsäuren.

Die Art der für die Herstellung der Polyester eingesetzten Diole oder Polyole ist an sich beliebig. Unter Polyolen sind Verbindungen zu verstehen, die bevorzugt mehr als zwei Hydroxylgruppen tragen. So können lineare oder verzweigte aliphatische und/oder cycloaliphatische und/oder aromatische Diole oder Polyole enthalten sein.

Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol (Dicidol), Isomere des Limonendimethanols, Isosorbit, Trimethylolpropan, Glycerin, 1,2,6-Hexantriol, Pentaerythrol und Mischungen daraus.

Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden.

Bevorzugt werden bifunktionelle Diole und Dicarbonsäuren eingesetzt. Ganz besonders bevorzugt werden erfindungsgemäß aliphatische Dicarbonsäuren und aliphatische Diole eingesetzt.

Der Erweichungspunkt der Carboxylgruppen-tragenden Polymere liegt vorzugsweise bei ≤ 170 °C, bevorzugt ≤ 150 °C. Die Polymere sind bei ≤ 200 °C für mindestens 24 Stunden unter Inertbedingungen stabil, das heißt sie zeigen keine signifikante Änderung der Eigenschaften oder einen Anstieg der Farbzahl.

Wesentlich ist, dass die eingesetzten Polymere Carboxylgruppen tragen. Somit liegt die Konzentration an Säureendgruppen, bestimmt nach DIN EN ISO 2114, insbesondere zwischen 1 und 200 mg KOH/g, bevorzugt jedoch bei 10 bis 100 mg KOH/g und ganz besonders bevorzugt bei 20 bis 50 mg KOH/g.

Die Konzentration an Hydroxylendgruppen, titrimetrisch nach DIN 53240-2 bestimmt, ist beliebig und liegt in der Regel zwischen 0 und 200 mg KOH/g, vorzugsweise zwischen 0 und 10 mg KOH/g.

Das zahlenmittlere Molekulargewicht der eingesetzten Carboxylgruppen-tragenden Polymere beträgt in der Regel 500 - 20 000 g/mol, vorzugsweise 1000 - 10 000 g/mol. Das zahlenmittlere Molekulargewicht wird im Rahmen der vorliegenden Erfindung nach DIN 55672-1 mittels Gelpermeationschromatographie in Tetrahydrofuran als Eluent und Polystyrol zur Kalibrierung bestimmt.

In der einfachsten Ausführungsform der vorliegenden Erfindung werden die Carboxylgruppen-tragenden Polymere mit Glycerincarbonat in Anwesenheit eines Katalysators umgesetzt.

In dem erfindungsgemäßen Verfahren werden die Herstellung der Carboxylgruppen-tragender Polymere und die Umsetzung mit Hydroxylgruppen-funktionalisierten fünfgliedrigen cyclischen Carbonaten, bevorzugt Glycerincarbonat, vorzugsweise in Anwesenheit eines Katalysators, miteinander kombiniert, so dass ein zweistufiges Verfahren erhalten wird. Demgemäß wird in dem erfindungsgemäßen Verfahren in einem ersten Reaktionsschritt die Carboxylgruppen-tragenden Polyester auf Basis von Di-oder Polyolen und Di- oder Polycarbonsäuren bzw. deren Derivate oder Poly(meth)acrylate durch Polykondensation bzw. Polymerisation hergestellt, und die erhaltenen Carboxylgruppen-tragenden Polymere anschließend in einem zweiten Reaktionsschritt mit Hydroxylgruppen-funktionalisierten fünfgliedrigen cyclischen Carbonaten, bevorzugt Glycerincarbonat, vorzugsweise in Anwesenheit eines Katalysators, umgesetzt.

Die Herstellung der Carboxylgruppen-tragenden Polymere, insbesondere im Falle der bevorzugt eingesetzten Polyester auf Basis von Di-oder Polyolen und Di- oder Polycarbonsäuren bzw. deren Derivate, erfolgt im ersten Reaktionsschritt bevorzugt über eine Schmelzekondensation. Hierzu werden die vorab genannten Di- oder Polycarbonsäuren und Di- oder Polyole im molaren Verhältnis von Carboxy- zu Hydroxygruppen von 0,8 bis 1,5 zu 1, bevorzugt 1,0 bis 1,3 zu 1, eingesetzt. Ein Überschuss an Carboxylgruppen gegenüber Hydroxygruppen ist bevorzugt, um eine ausreichende Konzentration an Carboxylgruppen am Polyester zu erhalten.

Die Polykondensation erfolgt bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitanverbindungen wie Tetrabutyltitanat. Denkbar sind auch Katalysatoren, die auf anderen Metallen wie z. B. Zinn, Zink oder Antimon basieren. Weiterhin sind weitere Additive und Fahrhilfsmittel wie Antioxidantien oder Farbstabilisatoren möglich.

Im zweiten Reaktionsschritt des erfindungsgemäßen Verfahrens werden die erhaltenen Carboxylgruppen-tragenden Polymere mit Hydroxylgruppen-funktionalisierten fünfgliedrigen cyclischen Carbonaten, bevorzugt Glycerincarbonat, vorzugsweise in Anwesenheit eines Katalysators, umgesetzt.

Beispiele geeigneter Hydroxylgruppen-funktionalisierter fünfgliedriger cyclischer Carbonate sind 4-Hydroxymethyl-1,3-dioxolan-2-on , 4-Hydroxyethyl-1,3-dioxolan-2-on, 4-Hydroxypropyl-1,3-dioxolan-2-on oder Zuckerderivate wie Methyl-3,4-O-Carbonyl-β-D-Galactopyranosid, wobei 4-Hydroxymethyl-1,3-dioxolan-2-on (Glycerincarbonat) insbesondere bevorzugt ist. Glycerincarbonat ist kommerziell verfügbar und wird aus Glycerinabfällen in der Biodieselproduktion gewonnen.

Die Umsetzung mit Glycerincarbonat erfolgt bei erhöhten Temperaturen, jedoch unterhalb der Zersetzungstemperatur des Glycerincarbonats. Bei Temperaturen oberhalb von 200°C beobachtet man einen Anstieg der Hydroxylgruppenkonzentration, vermutlich durch partielle Ringöffnung des Glycerincarbonats mit anschließender Decarboxylierung. Diese Nebenreaktion lässt sich durch einen Anstieg der Hydroxylzahl, titrimetrisch nach DIN 53240-2 bestimmt, verfolgen. Der Anstieg der Hydroxylzahl soll 0 bis maximal 20 mg KOH/g, bevorzugt 0 bis maximal 10 mg KOH/g betragen.

Bevorzugt erfolgt die Reaktion daher bei 100 - 200 °C, besonders bevorzugt bei 140 bis 200 °C und ganz besonders bevorzugt bei Temperaturen um 180 °C. Das Carboxylgruppen-tragende Polymer liegt bei dieser Temperatur als Flüssigkeit oder als viskose Schmelze vor. Bevorzugt erfolgt die Synthese in Substanz ohne Zugabe von Lösemittel. Somit erfolgt das gesamte erfindungsgemäße Verfahren bevorzugt ohne die Zugabe von Lösemittel in der flüssigen Phase oder Schmelze.

Das Carboxylgruppen-tragende Polymer wird in einem geeigneten Reaktionsgefäß, beispielsweise einem Rührkessel, vorgelegt, auf die Reaktionstemperatur erhitzt und das Hydroxylgruppen-funktionalisierte fünfgliedrige cyclische Carbonat, bevorzugt Glycerincarbonat, sowie in der bevorzugten Ausführungsform der Katalysator, zugegeben. Das während der Reaktion entstehende Wasser wird über eine Destillationsvorrichtung kontinuierlich abgetrennt. Um die Wasserabtrennung zu erleichtern und das Gleichgewicht der Veresterungsreaktion auf die Seite des modifizierten Produkts hin zu verschieben wird der Kesselinnendruck während der Reaktion schrittweise von Normaldruck auf < 100 mbar, bevorzugt < 50 mbar und besonders bevorzugt < 20 mbar erniedrigt. Der Reaktionsverlauf wird über die Konzentration an freien Carboxylgruppen, gemessen über die Säurezahl, verfolgt. Die Reaktionszeit beträgt 2 bis 20 Stunden. Eine weitere Aufreinigung des Polymers ist in der Regel nicht erforderlich.

Die Menge an Glycerincarbonat richtet sich nach der Konzentration der Carboxylgruppen am Polymer. Bevorzugt wird stöchiometrisch oder mit einem leichten Überschuss an Glycerincarbonat gearbeitet. Ein geringerer Überschuss an Glycerincarbonat führt zu deutlich verlängerten Reaktionszeiten gegenüber höheren Überschüssen. Ist der Überschuss an Glycerincarbonat jedoch zu hoch gewählt, verbleibt nicht umgesetztes Glycerincarbonat im Produkt, das sich aus der Reaktionsmischung aufgrund des hohen Siedepunkts von Glycerincarbonat nur sehr schwer abtrennen lässt. Der Glycerincarbonatüberschuss liegt bei 0 - 50 mol-%, bevorzugt bei 0 - 10 mol-% und ganz besonders bevorzugt bei 10 mol-% bezogen auf die molare Menge an freien Carboxylgruppen des Carboxylgruppen-tragenden Polymers.

Unter den beschriebenen Reaktionsbedingungen ist die Zugabe eines Katalysators bevorzugt, um eine ausreichende Reaktionsgeschwindigkeit zu erreichen. In Abwesenheit eines Katalysators wird in der Regel keine signifikante Verringerung der Carboxylgruppenkonzentration und nur eine langsame chemische Umsetzung beobachtet. Als Katalysator sind prinzipiell Substanzen geeignet, die als Lewissäuren wirken. Lewisbasen, wie beispielsweise tertiäre Amine, zeigen keine katalytische Reaktivität.

Allerdings neigen titanhaltige Lewissäuren, die häufig auch bei Schmelzekondensationen bei hohen Temperaturen eingesetzt werden, zu unerwarteten Nebenreaktionen. Es wurde gefunden, dass die Zugabe von Titansalzen und Titanorganylen als Katalysatoren zu einer deutlichen orangebraunen Verfärbung führt. Die katalytische Aktivität ist zudem vergleichsweise gering. Hingegen zeigen titanfreie Lewissäuren eine deutliche Beschleunigung der Reaktion und neigen gleichzeitig zu nur sehr geringen Verfärbungen. Es werden transparente bis gelbliche Schmelzen erhalten. Zu den bevorzugt eingesetzten titanfreien Lewissäuren zählen sowohl nichtmetallische Lewissäuren, wie beispielsweise p-Tolouolsulfonsäure oder Methylsulfonsäure, aber auch titanfreie metallische Lewissäuren, wie beispielsweise Zinksalze. Besonders bevorzugt werden zinnhaltige Lewissäuren als Katalysator eingesetzt. Geeignete Zinnverbindungen sind beispielsweise Zinn(II)octoat oder, besonders bevorzugt, Monobutylzinnsäure. Die Menge an Katalysator beträgt bevorzugt 1 - 10000 ppm, besonders bevorzugt 100 - 1000 ppm, bezogen auf die gesamte Reaktionsmischung. Es können auch Mischungen verschiedener Katalysatoren eingesetzt werden. Zudem ist es möglich die Katalysatormenge in mehreren Einzelportionen zuzugeben.

Bei der Durchführung des zweiten Reaktionsschritts können weitere Additive und Fahrhilfsmittel wie Antioxidantien oder Farbstabilisatoren zugegeben werden. Entsprechende Komponenten sind dem Fachmann bekannt.

Als Ergebnis des erfindungsgemäßen Verfahrens werden Polymere erhalten, die fünfgliedrige cyclische Carbonatgruppen enthalten.

Die erhaltenen carbonatfunktionalisierten Polymere besitzen eine Säurezahl, bestimmt nach DIN EN ISO 2114, von ≤ 10 mg KOH/g, bevorzugt ≤ 5 mg KOH/g und besonders bevorzugt ≤ 2 mg KOH/g. Die Konzentration an Hydroxylendgruppen in der Reaktionslösung, titrimetrisch nach DIN 53240-2 bestimmt, steigt während der Reaktion um maximal 20 mg KOH/g, bevorzugt um maximal 10 mg KOH/g, an. Sie liegt vorzugsweise zwischen 0 und 20 mg KOH/g.

Insbesondere bevorzugt handelt es sich bei den Polymeren um cyclische Carbonatgruppen enthaltende Polyester. Die für die Polyester einsetzbaren Ausgangskomponenten, insbesondere Di- oder Polycarbonsäuren und Di- oder Polyole sind vorab genannt.

Die nach dem erfindungsgemäßen Verfahren erhaltenen Polymere eignen sich beispielsweise als Bindemittel in isocyanatfreien Polyurethanformulierungen.

Die Umsetzung erfolgt dabei zum Beispiel über die Reaktion der cyclischen Carbonatgruppen mit Aminen. Durch den nukleophilen Angriff des Amins am Carbonylatom des cyclischen Carbonats kommt es zu einer Ringöffnungsreaktion und es entsteht eine Hydroxyurethangruppe. Auf diese Weise lassen sich gesundheitsschädliche Isocyanate in Polyurethanformulierungen vermeiden. In Bezug auf die Aminverbindungen gibt es grundsätzlich keine Einschränkungen. Bevorzugt werden jedoch aliphatische Polyamine mit mindestens zwei Aminfunktionalitäten eingesetzt. Die Reaktion zwischen cyclischen Carbonatgruppen und Amingruppen kann optional durch einen Katalysator beschleunigt werden. Ebenso kann die Formulierung weitere Bestandteile, wie Stabilisatoren, Weichmacher, Rheologiemodifizierer, Pigmente oder Füllstoffe enthalten.

Die Polyurethanformulierungen können beispielsweise in Lack-, Klebstoff- und Dichtformulierungen Anwendung finden. Hierbei eignen sich die nach dem erfindungsgemäßen Verfahren erhaltenen Polymere sowohl für den Einsatz in reaktiven einkomponentigen als auch als zweikomponentigen Systemen. Beim Auftrag der Formulierung muss eine ausreichende Benetzung des Substrats gewährleistet werden. Bei hochviskosen oder festen nach dem erfindungsgemäßen Verfahren erhaltenen Polymeren kann dies in der Regel entweder durch Herstellen einer Lösung oder durch eine Temperaturerhöhung erreicht werden. Die Lack-, Klebstoff- und Dichtformulierungen können auf unterschiedlichen Substraten angewendet werden. Hierzu zählen beispielsweise Kunststoffe, Glas, Papier, Holz, Stein und insbesondere Metalle wie Stahl und Aluminium.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

### Beispiel 1 (Monobutylzinnsäure bei 180 °C; erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 0,9 mg KOH/g, gemessen nach der DIN 53240-2 sowie einer Säurezahl von 29 mg KOH/g, gemessen nach der DIN EN ISO 2114, wird die Schmelze auf 180 °C abgekühlt. Es werden 329 g (entspricht 1,1 Äquivalente, bezogen auf die freien Carboxylgruppen) Glycerincarbonat und 0,05 Gewichtsprozent Monobutylzinnsäure zugegeben. Nach Erreichen einer Säurezahl von ≤ 1 mg KOH/g nach etwa 10 h ist die Reaktion beendet. Der erhaltene Carbonatgruppen tragende Polyester P1 weist eine Hydroxylzahl von 9,3 mg KOH/g, gemessen nach der DIN 53240-2, sowie eine Säurezahl von 0,7 mg KOH/g, gemessen nach der DIN EN ISO 2114, auf. Die Hydroxylzahl ist während der Modifizierung mit Glycerincarbonat um nur 8,4 mg KOH/g gestiegen. Daraus lässt sich ableiten, dass die Ringöffnung des Glyzerincarbonats unter Decarboxylierung zum Glyzerinderivat nur als untergeordnete Nebenreaktion stattfindet. Der Erhalt der fünfgliedrigen cyclischen Carbonate lässt sich auch über NMR Spektroskopie nachweisen. Im ¹³C NMR verschiebt sich das Signal des Carbonylkohlenstoffs des freien Glyzerincarbonats bei 155 ppm durch kovalente Anbindung an das Polymer zu 154 ppm. Auch die beiden anderen Signale des Carbonatrings bei 77ppm (CH) und 66 ppm (CH₂) erfahren durch die Anbindung an das Polymer eine Hochfeldverschiebung von ca. 1 - 3 ppm.

### Beispiel 2 (Zinn(II)octoat bei 180 °C; erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,7 mg KOH/g, gemessen nach der DIN 53240-2 sowie einer Säurezahl von 30 mg KOH/g, gemessen nach der DIN EN ISO 2114, wird die Schmelze auf 180 °C abgekühlt. Es werden 341 g (entspricht 1,1 Äquivalente, bezogen auf die freien Carboxylgruppen) Glycerincarbonat und 0,05 Gewichtsprozent Zinn(II)octoat zugegeben. Nach Erreichen einer Säurezahl von ≤ 2 mg KOH/g nach etwa 15 h ist die Reaktion beendet. Der erhaltene Carbonatgruppen tragende Polyester P2 weist eine Hydroxylzahl von 10,0 mg KOH/g, gemessen nach der DIN 53240-2, sowie eine Säurezahl von 1,8 mg KOH/g, gemessen nach der DIN EN ISO 2114, auf. Die Hydroxylzahl ist während der Modifizierung mit Glycerincarbonat um 8,3 mg KOH/g gestiegen.

### Beispiel 3 (ohne Katalysator bei 180°C; nicht erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,7 mg KOH/g, gemessen nach der DIN 53240-2 sowie einer Säurezahl von 30 mg KOH/g, gemessen nach der DIN EN ISO 2114, wird die Schmelze auf 180 °C abgekühlt. Es werden 341 g (entspricht 1,1 Äquivalente bezogen auf die freien Carboxylgruppen) Glycerincarbonat zugegeben. Ein Katalysator wird nicht zugegeben. Über 7h Reaktionszeit lässt sich kein signifikanter Abbau der Säure- oder Hydroxylzahl beobachten. Der erhaltene Polyester weist eine Hydroxylzahl von 26 mg KOH/g, gemessen nach der DIN 53240-2 sowie eine Säurezahl von 21 mg KOH/g, gemessen nach der DIN EN ISO 2114, auf. Es ist keine messbare Umsetzung in der angegebenen Reaktionszeit erfolgt. Die Hydroxylzahl ist während der Reaktion um 19,3 mg KOH/g gestiegen.

### Beispiel 4 (Titankatalysator, 180 °C; erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,7 mg KOH/g, gemessen nach der DIN 53240-2 sowie einer Säurezahl von 30 mg KOH/g, gemessen nach der DIN EN ISO 2114, wird die Schmelze auf 180 °C abgekühlt. Es werden 341 g (entspricht 1,1 Äquivalente bezogen auf die freien Carboxylgruppen) Glycerincarbonat und 0,05 Gewichtsprozent des bereits in der Schmelzekondensation eingesetzten Katalysators zugegeben. Bereits bei Zugabe des Katalysators färbt sich die Reaktionsschmelze orange bis hellbraun, im weiteren Verlauf wird ein dunkelbraunes Produkt erhalten. Nach Erreichen einer Säurezahl von ≤ 2 mg KOH/g nach etwa über 18 h ist die Reaktion beendet. Der erhaltene Polyester weist eine Hydroxylzahl von 24 mg KOH/g, gemessen nach der DIN 53240-2 sowie eine Säurezahl von 0,4 mg KOH/g, gemessen nach der DIN EN ISO 2114, auf. Die Hydroxylzahl ist während der Modifizierung mit Glycerincarbonat um 22,3 mg KOH/g gestiegen.

### Beispiel 5 (Monobutylzinnsäure bei 220 °C; erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,7 mg KOH/g, gemessen nach der DIN 53240-2 sowie einer Säurezahl von 30 mg KOH/g, gemessen nach der DIN EN ISO 2114, wird die Schmelze auf 220 °C abgekühlt. Es werden 341 g (entspricht 1,1 Äquivalente bezogen auf die freien Carboxylgruppen) Glycerincarbonat und 0,05 Gewichtsprozent Monobutylzinnsäure zugegeben. Nach Erreichen einer Säurezahl von ≤ 2 mg KOH/g nach 4,5 h ist die Reaktion beendet. Der erhaltene Polyester weist eine Hydroxylzahl von 21 mg KOH/g, gemessen nach der DIN 53240-2 sowie eine Säurezahl von 0,4 mg KOH/g, gemessen nach der DIN EN ISO 2114, auf. Die vergleichsweise hohe Hydroxylzahl weist auf Nebenreaktionen durch die thermische Ringöffnung der Carbonatgruppe hin. Die Hydroxylzahl ist während der Modifizierung mit Glycerincarbonat um 19,3 mg KOH/g gestiegen.

### Beispiel 6 (Methylsulfonsäure bei 180 °C; erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend wird der Druck in der Apparatur stufenweise bis auf 10 mbar erniedrigt. Nach Erreichen einer Hydroxylzahl von 4,4 mg KOH/g, gemessen nach der DIN 53240-2 sowie einer Säurezahl von 30 mg KOH/g, gemessen nach der DIN EN ISO 2114, wird die Schmelze auf 180 °C abgekühlt. Es werden 341 g (entspricht 1,1 Äquivalente bezogen auf die freien Carboxylgruppen) Glycerincarbonat und 0,2 Gewichtsprozent Methylsulfonsäure zugegeben. Der erhaltene Polyester weist eine Hydroxylzahl von 9,3 mg KOH/g, gemessen nach der DIN 53240-2 sowie eine Säurezahl von 3,0 mg KOH/g, gemessen nach der DIN EN ISO 2114, auf. Die vergleichsweise hohe Säurezahl weist auf einen unvollständigen Umsatz hin. Die Hydroxylzahl ist während der Modifizierung mit Glycerincarbonat um 4,9 mg KOH/g gestiegen.

### Beispiel 7 (Zink(II)-acetat bei 220 °C; erfindungsgemäß)

3000 g Adipinsäure (20,5 mol) werden zusammen mit 2290 g Hexandiol-1,6 (19,4 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,7 mg KOH/g, gemessen nach der DIN 53240-2 sowie einer Säurezahl von 30 mg KOH/g, gemessen nach der DIN EN ISO 2114, wird die Schmelze auf 220 °C abgekühlt. Es werden 341 g (entspricht 1,1 Äquivalente bezogen auf die freien Carboxylgruppen) Glycerincarbonat und 0,05 Gewichtsprozent Zink(II)-acetat zugegeben. Der erhaltene Polyester weist eine Hydroxylzahl von 25 mg KOH/g, gemessen nach der DIN 53240-2 sowie eine Säurezahl von 6,7 mg KOH/g, gemessen nach der DIN EN ISO 2114, auf. Die vergleichsweise hohe Hydroxylzahl weist auf Nebenreaktionen durch die thermische Ringöffnung der Carbonatgruppe hin. Die Hydroxylzahl ist während der Modifizierung mit Glycerincarbonat um 23,7 mg KOH/g gestiegen.

Tabelle 1 gibt einen Überblick über die Parameter der erhaltenen Polyester

**Tabelle 1: Vergleich der Beispielreaktionen zur Umsetzung linearer Hexandiol-Adipate mit 1.1 Äquivalenten Glycerincarbonat zu COOH-Endgruppen**

| Beispiel | Katalysator (Gew-%) | Temperatur (°C) | OHZ [mg KOH/g] | SZ [mg KOH/g] |
|---|---|---|---|---|
| 1 | MBTS | 180 | 9,3 | 0,7 |
| 2 | Sn(Oct)₂ | 180 | 10 | 1,8 |
| 3 | - | 180 | 26 | 21 |
| 4 | Ti-Kat | 180 | 24 | 0,4 |
| 5 | MBTS | 220 | 21 | 0,4 |
| 6 | Methylsulfonsäure | 180 | 9,3 | 3,0 |
| 7 | Zink(II)-acetat | 220 | 25 | 6,7 |

| | | | | |
|---|---|---|---|---|
| OHZ = OH-Zahl SZ = Säurezahl | | | | |

### Beispiel 8 (Verzweigter Polyester, Monobutylzinnsäure bei 180 °C; erfindungsgemäß)

3000 g Adipinsäure (20,5 mol) werden zusammen mit 2200 g Hexandiol-1,6 (18,6 mol) und 80 g 1,1,1-Trimethylolpropan (0,6 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,5 mg KOH/g, gemessen nach der DIN 53240-2 sowie einer Säurezahl von 35 mg KOH/g, gemessen nach der DIN EN ISO 2114, wird die Schmelze auf 180 °C abgekühlt. Es werden 398 g (entspricht 1,1 Äquivalente bezogen auf die freien Carboxylgruppen) Glycerincarbonat (3,4 mol) und 0,05 Gewichtsprozent Monobutylzinnsäure zugegeben. Nach Erreichen einer Säurezahl von ≤ 2 mg KOH/g nach 7 h ist die Reaktion beendet. Der erhaltene Polyester weist eine Hydroxylzahl von 14 mg KOH/g, gemessen nach der DIN 53240-2 sowie eine Säurezahl von 0,3 mg KOH/g, gemessen nach der DIN EN ISO 2114, auf. Die Hydroxylzahl ist während der Modifizierung mit Glycerincarbonat um 12,5 mg KOH/g gestiegen. Molekulargewichtsanalyse des Produkts mittels GPC zeigte ein mittleres Molekulargewicht von *M*ₙ = 4.400 Da bei einer Molekulargewichtsverteilung von PDI = 6,8.

### Beispiel 9 (Verzweigter Polyester, Zink(II)-Acetat bei 180 °C; erfindungsgemäß)

3000 g Adipinsäure (20,5 mol) werden zusammen mit 2200 g Hexandiol-1,6 (18,6 mol) und 80 g 1,1,1-Trimethylolpropan (0,6 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 1,5 mg KOH/g, gemessen nach der DIN 53240-2 sowie einer Säurezahl von 35 mg KOH/g, gemessen nach der DIN EN ISO 2114, wird die Schmelze auf 180 °C abgekühlt. Es werden 398 g (entspricht 1,1 Äquivalente bezogen auf die freien Carboxylgruppen) Glycerincarbonat (3,4 mol) und 0,1 Gewichtsprozent Zink(II)-Acetat zugegeben. Nach Erreichen einer Säurezahl von ≤ 2 mg KOH/g nach 8,5 h ist die Reaktion beendet. Der erhaltene Polyester weist eine Hydroxylzahl von 22 mg KOH/g, gemessen nach der DIN 53240-2 sowie eine Säurezahl von 1,4 mg KOH/g, gemessen nach der DIN EN ISO 2114, auf. Die vergleichsweise hohe Hydroxylzahl weist auf eine Nebenreaktionen, vermutlich Quervernetzung, hin. Die Hydroxylzahl ist während der Modifizierung mit Glycerincarbonat um 21,5 mg KOH/g gestiegen. Molekulargewichtsanalyse des Produkts mittels GPC zeigte ein mittleres Molekulargewicht von *M*ₙ = 5000 Da bei einer Molekulargewichtsverteilung von PDI = 40.

Tabelle 2 gibt einen Überblick über die Parameter der erhaltenen Polyester.

**Tabelle 2: Vergleich der Molekulargewichte und Molekulargewichtsverteilungen bei der Umsetzung verzweigter Hexandiol-Adipate mit 1.1 Äquivalenten Glycerincarbonat zu COOH-Endgruppen bei zwei verschiedenen Katalysatoren**

| Beispiel | Katalysator (Gew-%) | Temperatur (°C) | OHZ | SZ | Mn (Da) | PDI |
|---|---|---|---|---|---|---|
| 8 | MBTS | 180 | 14 | 0,3 | 4400 | 6,8 |
| 9 | Zn(II)-Acetat | 180 | 22 | 1,4 | 5000 | 40 |

Aus den oben genannten Daten wird durch die unterschiedliche Molekulargewichtsverteilung ersichtlich, dass der bevorzugte Einsatz von Zinn-Katalysatoren zu Polymeren mit einer besser definierten Struktur führt, die vorteilhaft eingesetzt werden können.

### Beispiel 10 (Verzweigter aliphatischer Polyester, MBTS bei 180 °C; erfindungsgemäß)

3200 g Adipinsäure (21,9 mol) werden zusammen mit 2050 g Neopentylglokol (19,7 mol) und 80 g 1,1,1-Trimethylolpropan (0,6 mol) in einem Kolben mit Destillationsaufsatz unter Stickstoff aufgeschmolzen. Bei einer Temperatur von 240 °C wird innerhalb von etwa vier bis sechs Stunden der größte Teil des entstehenden Reaktionswassers abdestilliert. Anschließend werden 0,05 Gew.-% eines Titankatalysators zugegeben und der Druck in der Apparatur stufenweise bis auf 10 mbar erniedrigt. Nach Erreichen einer Hydroxylzahl von 0,6 mg KOH/g, gemessen nach der DIN 53240-2 sowie einer Säurezahl von 36 mg KOH/g, gemessen nach der DIN EN ISO 2114, wird die Schmelze auf 180 °C abgekühlt. Es werden 405 g (entspricht 1,1 Äquivalente bezogen auf die freien Carboxylgruppen) Glycerincarbonat (3,4 mol) und 0,05 Gewichtsprozent MBTS zugegeben. Nach Erreichen einer Säurezahl von ≤ 2 mg KOH/g nach 15 h ist die Reaktion beendet. Der erhaltene Polyester weist eine Hydroxylzahl von 12 mg KOH/g, gemessen nach der DIN 53240-2 sowie eine Säurezahl von 0,9 mg KOH/g, gemessen nach der DIN EN ISO 2114, auf. Die Hydroxylzahl ist während der Modifizierung mit Glycerincarbonat um 11,4 mg KOH/g gestiegen. Molekulargewichtsanalyse des Produkts mittels GPC zeigte ein mittleres Molekulargewicht von *M*ₙ = 4100 Da bei einer Molekulargewichtsverteilung von PDI = 4,2.

## Patentansprüche

1. Verfahren zur Herstellung cyclische Carbonatgruppen tragender Polymere durch Umsetzung Carboxylgruppen-tragender Polymere, ausgewählt aus der Gruppe umfassend Polyester auf Basis von Di-oder Polyolen und Di- oder Polycarbonsäuren bzw. deren Derivaten oder Poly(meth)acrylate, mit Hydroxylgruppen-funktionalisierten fünfgliedrigen cyclischen Carbonaten, unter Ausschluss des Zusatzes von Isocyanaten, **dadurch gekennzeichnet, dass** in einem ersten Reaktionsschritt die Carboxylgruppen-tragenden Polymere durch Polykondensation bzw. Polymerisation hergestellt, und die erhaltenen Carboxylgruppen-tragenden Polymere anschließend in einem zweiten Reaktionsschritt mit Hydroxylgruppen-funktionalisierten fünfgliedrigen cyclischen Carbonaten umgesetzt werden.

2. Verfahren gemäß Anspruch 1, **dadurch gekennzeichnet, dass** die Umsetzung in Gegenwart eines Katalysators durchgeführt wird.

3. Verfahren gemäß Anspruch 2, **dadurch gekennzeichnet, dass** der Katalysator ausgewählt ist aus titanfreien Lewissäuren.

4. Verfahren gemäß Anspruch 2 oder 3, **dadurch gekennzeichnet, dass** zinnhaltige Lewissäuren als Katalysator eingesetzt werden.

5. Verfahren gemäß einem oder mehreren der Ansprüche 1 bis 4, **dadurch gekennzeichnet, dass** das Hydroxylgruppen-funktionalisierte fünfgliedrige cyclische Carbonat Glycerincarbonat ist.

6. Verfahren gemäß einem oder mehreren der Ansprüche 1 bis 5, **dadurch gekennzeichnet, dass** die Herstellung der Carboxylgruppen-tragenden Polymere im ersten Reaktionsschritt über eine Schmelzekondensation erfolgt.

7. Verfahren gemäß einem oder mehreren der Ansprüche 1 bis 6, **dadurch gekennzeichnet, dass** die Polykondensation bei Temperaturen zwischen 150 und 280 °C innerhalb von 3 bis 30 Stunden erfolgt.

8. Verfahren gemäß einem oder mehreren der Ansprüche 1 bis 8, **dadurch gekennzeichnet, dass** die Umsetzung lösemittelfrei erfolgt.

## Claims

1. Process for preparing polymers bearing cyclic carbonate groups by reacting carboxyl-bearing polymers selected from the group comprising polyesters based on di- or polyols and di- or polycarboxylic acids or derivatives thereof or poly(meth)acrylates, with hydroxyl-functionalized five-membered cyclic carbonates, without addition of isocyanates, **characterized in that**, in a first reaction step, the carboxyl-bearing polymers are prepared by polycondensation or polymerization, and the resultant carboxyl-bearing polymers are then reacted in a second reaction step with hydroxyl-functionalized five-membered cyclic carbonates.

2. Process according to Claim 1, **characterized in that** the reaction is conducted in the presence of a catalyst.

3. Process according to Claim 2, **characterized in that** the catalyst is selected from titanium-free Lewis acids.

4. Process according to Claim 2 or 3, **characterized in that** tin-containing Lewis acids are used as catalyst.

5. Process according to one or more of Claims 1 to 4, **characterized in that** the hydroxyl-functionalized five-membered cyclic carbonate is glycerol carbonate.

6. Process according to one or more of Claims 1 to 5, **characterized in that** the carboxyl-bearing polymers are prepared in the first reaction step via a melt condensation.

7. Process according to one or more of Claims 1 to 6, **characterized in that** the polycondensation is effected at temperatures between 150 and 280°C within 3 to 30 hours.

8. Process according to one or more of Claims 1 to 8, **characterized in that** the reaction is effected without solvent.

## Revendications

1. Procédé de fabrication de polymères portant des groupes carbonate cycliques par réaction de polymères portant des groupes carboxyle, choisis dans le groupe comprenant les polyesters à base de di- ou de polyols et d'acides di- ou polycarboxyliques ou leurs dérivés, ou de poly(méth)acrylates, avec des carbonates cycliques à cinq chaînons fonctionnalisés par des groupes hydroxyle, à l'exclusion de l'addition d'isocyanates, **caractérisé en ce que**, dans une première étape de réaction, on fabrique par polycondensation ou polymérisation les polymères portant des groupes carboxyle, puis, dans une deuxième étape de réaction, on fait réagir les polymères portant des groupes carboxyle obtenus avec des carbonates cycliques à cinq chaînons fonctionnalisés par des groupes hydroxyle.

2. Procédé selon la revendication 1, **caractérisé en ce que** la réaction est mise en œuvre en présence d'un catalyseur.

3. Procédé selon la revendication 2, **caractérisé en ce que** le catalyseur est choisi parmi les acides de Lewis sans titane.

4. Procédé selon la revendication 2 ou 3, **caractérisé en ce qu'**on utilise comme catalyseur des acides de Lewis contenant de l'étain.

5. Procédé selon l'une ou plusieurs des revendications 1 à 4, **caractérisé en ce que** le carbonate cyclique à cinq chaînons fonctionnalisé par des groupes hydroxyle est le carbonate de glycérol.

6. Procédé selon l'une ou plusieurs des revendications 1 à 5, **caractérisé en ce que** la fabrication des polymères portant des groupes carboxyle a lieu dans la première étape de réaction par une condensation à l'état fondu.

7. Procédé selon l'une ou plusieurs des revendications 1 à 6, **caractérisé en ce que** la polycondensation a lieu à des températures entre 150 et 280 °C en 3 à 30 heures.

8. Procédé selon l'une ou plusieurs des revendications 1 à 8, **caractérisé en ce que** la réaction est mise en œuvre sans solvant.
